# EUROPEAN PATENT SPECIFICATION

(11) **EP 3 544 846 B1**
(45) Date of publication and mention of the grant of the patent: **06.10.2021**
(21) Application number: 17811468.2
(22) Date of filing: 20.11.2017
(51) Int. Cl.: B60L 15/00, H02P 25/18, B60L 15/20, B60L 53/14, B60L 53/22, B60L 53/24, B60L 55/00

(54) **INTEGRATED ELECTRIC GEAR AND CHARGER SYSTEM FOR BATTERY POWERED ELECTRIC VEHICLES**
INTEGRIERTES ELEKTRISCHES GETRIEBE UND LADESYSTEM FÜR BATTERIEBETRIEBENE ELEKTROFAHRZEUGE
SYSTÈME D'ENGRENAGE ET DE CHARGEUR ÉLECTRIQUE INTÉGRÉ DESTINÉ À DES VÉHICULES ÉLECTRIQUES ALIMENTÉS PAR BATTERIE

(30) Priority: 22.11.2016 DE 102016223015
(43) Date of publication of application: 02.10.2019
(73) Proprietor: Elaphe Pogonske Tehnologije D.o.o., 1000 Ljubljana (SI)
(72) Inventor: MOTALN, Tomaz, 1000 Ljubljana (SI); LAMPIC, Gorazd, 1231 Ljubljana (SI); MEDIC, Urban, 1000 Ljubljana (SI)
(74) Representative: Grünecker Patent- und Rechtsanwälte PartG mbB
(86) International application number: PCT/EP2017/079793
(87) International publication number: WO 2018/095868

(56) References cited:
- WO-A1-2011/159241
- US-A1- 2002 163 262
- US-B1- 6 449 181
- SAEID HAGHBIN ET AL: "Integrated motor drive and non-isolated battery charger based on the torque cancelation in the motor", POWER ELECTRONICS AND DRIVE SYSTEMS (PEDS), 2013 IEEE 10TH INTERNATIONAL CONFERENCE ON, IEEE, 22 April 2013 (2013-04-22), pages 824-829, XP032420868, DOI: 10.1109/PEDS.2013.6527131 ISBN: 978-1-4673-1790-0
- YEE-PIEN YANG ET AL: "An Electric Gearshift With Ultracapacitors for the Power Train of an Electric Vehicle With a Directly Driven Wheel Motor", IEEE TRANSACTIONS ON VEHICULAR TECHNOLOGY, IEEE SERVICE CENTER, PISCATAWAY, NJ, US, vol. 56, no. 5, 1 September 2007 (2007-09-01), pages 2421-2431, XP011192665, ISSN: 0018-9545, DOI: 10.1109/TVT.2007.899956

## Description

### Technical Field

The present invention relates to battery powered electric vehicles, and in particular to an integrated electric gear and charger system for such vehicles, as well as to electric vehicles with such an integrated electric gear and charger system.

### Background Art

Internal combustion engine propelled vehicles are outperformed by electric vehicles in fields like energy efficiency, lower emissions and in many other characteristics. Direct drive electric vehicles, i.e. vehicles with no mechanical gears, are particularly interesting.

Several implementations of direct drive vehicle architectures are possible, e.g. electric motors located directly inside the wheel rim (also referred to as "in-wheel motors"), or electric motors located on the drive axle connected to the wheels, or a central motor connected to a single or multiple drive axles via a mechanical distribution system without reduction, or other principals that do not utilize mechanical gear mechanisms. Mechanical gear mechanisms introduce additional energy loss of the system, take up some space, add to the weight, and increase the overall price of the vehicle. In accordance with the goals of simplifying and improving drive systems, implementation of direct drive topologies seems very reasonable.

The down side of direct drives is reflected in demands for increased performances of motors and electronics, such as wide operating ranges of motor speed and torque, and electronics performance under high current conditions at high voltages. The challenge of an efficient design is managing cost, weight, and used volume inside a vehicle. At the power electronics field, these main issues are dealt with at the power controllers (inverters) and battery charger systems. Cost, size, weight and - in cases of high power capabilities - the need for additional cooling, make battery charger design a special challenge within the whole system design.

Electric gears for switching between different phase winding configurations are generally known in the art and were already described, for instance, in U.S. patent US 2,243,337.

A variable-speed electric motor is also known from U.S. patent US 1,977,950, which describes an application of an electric gear comprising an inner stator winding and an outer stator winding achieving the electric gear by means of the relative physical position between the inner and the outer stator.

An electric gear for electric vehicles with direct drive is disclosed in Slovenian patent number 23465 and aims at a reduction of cost, weight and size of associated power electronics within electric vehicles. This solution describes the connection configurations between motor windings and electronics, required for achieving the electric gear functionality. The conventional electric gear, however, involves the use of a mechanical clutch between the driving electric motor and the driven wheel.

The article "Integrated motor drive and non-isolated battery charger based on the split-phase PM motors for plug-in vehicles" by Saeid Haghbin et al. (The Journal of Engineering, June 2014), discloses a technique for using the electric motor of a plug-in vehicle as an inductor for a charger circuit. In order to avoid any torque being developed in the electric motor because of a current flow in the stator windings during charging time, the windings of the split-phase motor are controlled in such way that any torques generated by the individual windings cancel each other. This technique is also disclosed in WO 2011/159241 A1 and the article "Integrated motor drive and non-isolated battery charger based on the torque cancelation in the motor" by Saeid Haghbin and Isabel Serrano Guillen (10th International Conference on Power Electronics and Drive Systems (PEDS), IEEE, 2013).

The article "Novel Design of Electric Gearshift with Ultracapacitors in the Power Train of Electrical Vehicle with Direct-Driven Wheel Motor" by Yee-Pien Yang et al. (IEEE Transactions on Vehicular Technology, 2005) describes the switching between electric gear windings by means of a large number of contactor-switches as the switching parts.

In view of the above solutions, there is a need for reducing cost, weight and size of the power electronics.

### Summary of the Invention

In order to reduce cost, weight and size of the conventional power electronics for battery powered electric vehicles, it is the particular approach of the present invention to integrate the electric gear with the battery charger.

According to a first aspect of the present invention, a driving system for an electric machine according to claim 1 is provided.

According to this configuration, the power electronics can be shared among the inverter and the charger, thus achieving significant savings in terms of hardware complexity, cost, weight and size.

The first plurality of switches is preferably configured for interrupting a driving current through the windings of the electric machine. In this manner, any flow of electric current through the windings of the machine can be prevented during, e.g., an operation of charging the battery from electric power delivered by an external power source, such as the mains grid.

In a preferred embodiment, the controller is further configured for controlling the first plurality of switches and the second plurality of switches during a battery charging operation such that the output of the charger is connected with the battery while any driving current through the windings of the electric machine is interrupted by means of the first plurality of switches.

The controller is further configured for controlling the second plurality of switches in accordance with a pulse-width modulation scheme so as to generate a battery charging current having a desired amplitude during the battery charging operation. Further, the controller may also be configured for controlling the second plurality of switches in accordance with a pulse-width modulation scheme so as to generate, for each winding of the electric machine, a driving current having a desired amplitude, frequency and phase during a motor driving operation. By means of PWM control, power electronics of the inverter can be employed both for generating the motor driving currents and for regulating a battery charging current.

The controller is further configured for receiving a request for switching the wiring configuration of the electric machine from a first configuration to a second configuration, for interrupting PWM control of the second plurality of switches, changing switching states of the first plurality of switches to the to second configuration, and restarting PWM control of the second plurality of switches in accordance with the second configuration. The request for switching the wiring configuration, i.e., for initiating a shift of the electric gear, can be transmitted via a digital control bus, such as a CAN bus, FlexRay, or any other suitable control bus.

Preferably, the desired amplitude, frequency and phase of the driving currents after restarting PWM control are adjusted such that a torque delivered by the electric machine is basically identical to a torque delivered by the electric machine immediately before the wiring configuration has been switched. In this manner, smooth operation of the vehicle can be ensured. For the comfort of driving it is important to have low, or no torque disturbances during operation of the vehicle. The disturbances are any sudden unwanted changes in torque that can result in unwanted feeling of acceleration of the person(s) inside the vehicle. Of course, if the vehicle is supposed to accelerate or decelerate by the driver, or any semi or fully automated driving system, then the changes of torque are not unwanted. If the disturbances are only for a very short period of time, e.g. between 0.05 and 0.1 seconds, then at any reasonable torque change, this will not result in unwanted feeling of acceleration of the person(s) inside the vehicle.

The changing of the switching state of the first plurality of switches is completed within a single PWM time period. Such a rapid change of the wiring configuration has the advantage that there is basically no drop in the motor phase currents.

In a preferred implementation, each of the first plurality of switches and/or each of the second plurality of switches is a semiconductor switch, such as a MOSFET, a BJT, or an IGBT. Semiconductor switches have several advantages, including increased lifetime, prevention of arcing, resilience to vibrations, and a wide range of switching frequencies.

In a preferred embodiment with two different electric wiring configurations, the first plurality of switches may comprise three switches for each machine phase, said switches being configured for connecting two partial windings of each of the machine phase windings into either one of a parallel circuit configuration and a series circuit configuration. Generally, a winding for each phase of the machine may be divided into N partial windings. In this case the first plurality of switches may comprise 3x(N-1) switches for each phase of the machine for connecting the respective partial windings in series or in parallel.

The charger may advantageously be configured for synchronizing charge current control to a phase of the external power supply by detecting zero-crossings of a voltage of the external power supply. In this manner, switching noise can be reduced and the efficiency of the power conversion can be improved.

In a preferred implementation, the charger is configured for returning electric power from the battery back to the external power supply. This allows for a stabilization of grid voltage and for novel and decentralized power distribution grids.

The charger may also comprise a charger switch for disconnecting the charger from the inverter. Thus, the charger may be connected to the inverter during charging operation and disconnected from the inverter during motor driving operation, thereby avoiding any interference of the charger electronics with the motor operation.

According to a second aspect of the present invention, an electric vehicle with the driving system according to the first aspect is provided.

### Brief Description of the Drawings

The above and other objects and features of the present invention will become more apparent from the following description and preferred embodiments given in conjunction with the accompanying drawings, in which:
Figure 1 shows the interconnection schematic of the integrated electric gear and charger system for battery powered electric vehicles with a two-stage electric gear and a single phase electric battery charger, according to an embodiment of the present invention,
Figure 2 shows the architecture of the integrated electric gear and charger system, according to an embodiment of the present invention,
Figure 3 shows a simplified connection schematic of a two-stage electric gear for a star connected motor,
Figure 4 shows the electrical connection schematic of a two-stage electric gear,
Figure 5 shows the electrical connection schematic of one of the phases of a four-stage electric gear,
Figure 6 shows the sequence of the electric gear switching procedure during motor operation, according to an embodiment of the present invention, and
Figure 7 shows the simplified schematic of the integrated charger parts.

### Detailed Description

The integrated electric gear and charger (IEGC) system for battery powered electric vehicles is described as implemented in an electric car (automobile). However, the present invention is not limited to electric cars and can be applied to other electric vehicles utilizing electric propulsion, such as hybrid vehicles, E-bikes, electric forklifts, and others. Moreover, although the present description is focused on a 2-stage (i.e. 2 gears) electric gear configuration, the present invention is also applicable to systems with any other stage/gear count. Further, although the embodiments described here below show only a single motor and a single inverter/controller, the present invention can also be applied to systems comprising any number of electric motors and inverters. The terms "electrical motor" and "electrical machine" as used herein encompass both the functionality of a motor and the functionality of a generator, if appropriate.

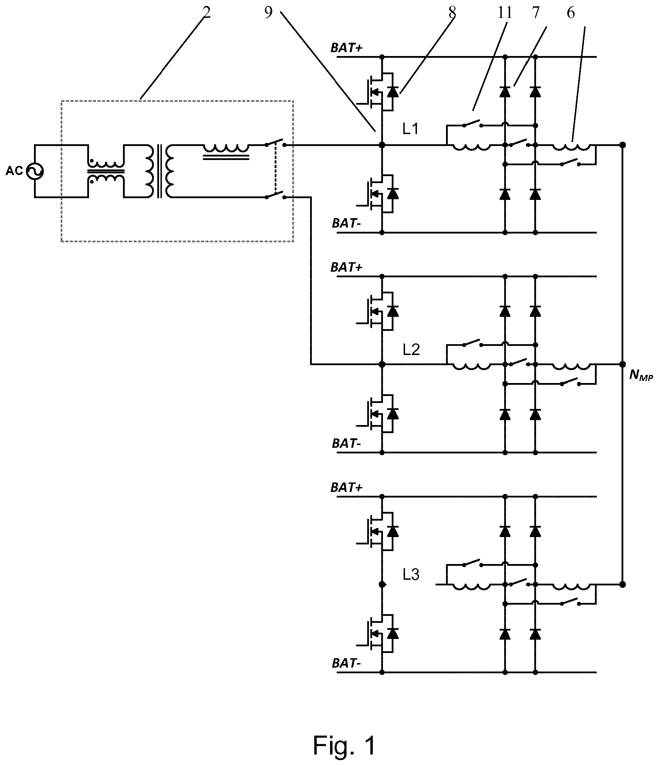

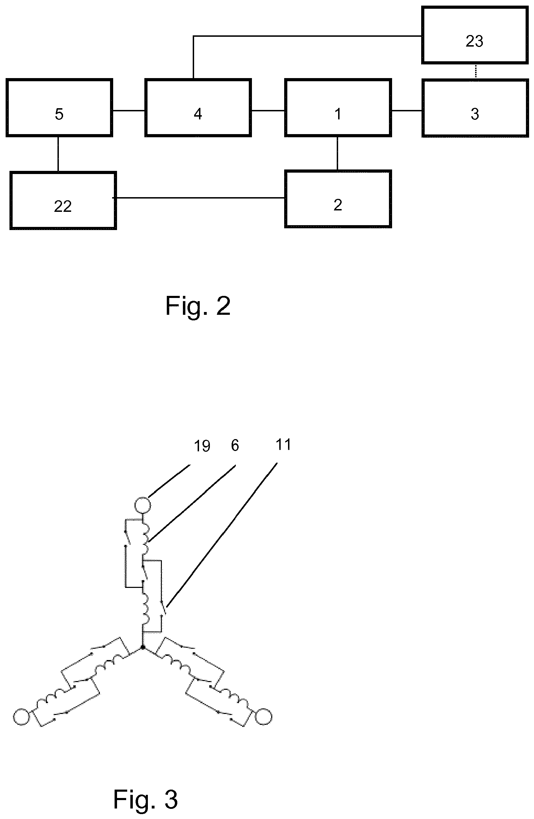

Figure 1 shows a schematic diagram of an integrated electric gear and charger system for battery powered electric vehicles with a two-stage electric gear and a single phase electric battery charger, according to an embodiment of the present invention. An architectural overview of the drive system is depicted in Fig. 2.

The electronic system of an integrated electric gear and charger comprises an electric gear (1) for switching a wiring configuration of the electric motor (3), a charger (2) for charging the battery (5) with power provided from an external power source, a power inverter (4) for driving the electric motor (3), and a battery management system (22). The electric gear comprises a plurality (at least six switches in certain embodiments) of switches (11) for changing between the electric motor (3) wiring configurations, resulting in different motor characteristics. These characteristics result from the physical connections of partial motor wirings (6) in combinations of parallel and/or series interconnections. The switches (11) of the electric gear allow for a direct connection of the charger (2) and the inverter (4). Specifically, at least two conductors from the charger may be connected directly to a corresponding number of half-bridges of the inverter. In this manner, the half-bridges of the inverter (4) unit are utilized both as the power electronics of the charger and as the power electronics of the inverter. Specifically, said half-bridges enable the system both to charge the battery (5) from the electrical grid (14) and to drive the phases of the electric motor (3). The system may further comprise a position sensor (23) communicatively coupled to the inverter (4) if accurate rotor position is required for controlling the motor.

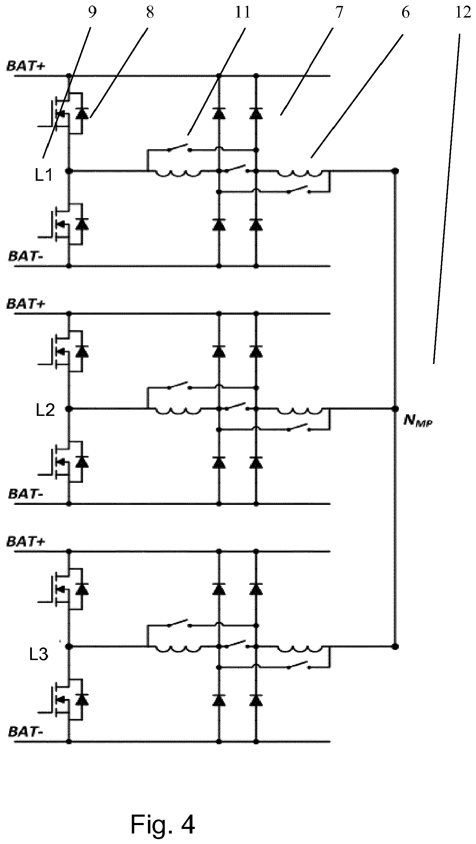

Figure 3 shows a simplified connection scheme of a two-stage electric gear for a star connected motor with three phases. Figure 4 shows the circuit diagram for of a two-stage electric gear together with half-bridges (9) of the inverter.

The electric gear system comprises three switches (11) for each motor phase. By setting the switching state of the various switches, the partial windings (6) of each motor phase can be connected either in a series configuration or in a parallel configuration. The switching elements (11) used can be either solid-state (transistors) or mechanical switches. Advantages of using solid-state elements are increased lifetime, no arcing, resilience to vibration and wide frequency range capability. Since typical power transistors are inherently unidirectional switches, each switch is comprised of two transistors connected in series at their source terminals (source applies to MOS-FETs, emitter to BJTs, IGBTs, etc.). Thus, bidirectional switching functionality is achieved using a single "gate driver" per switch. Paralleling of multiple transistors is also possible in the same way and under same conditions as paralleling of switching transistors in any typical application utilizing the transistor as a switching element. The electrical layout of the switches at different nodes across the motor wirings requires the use of isolated gate drivers. Compared to a typical power inverter, the switching times of the electric gear switches can be considerably longer. Acceptable switching time can exceed 1µs, which means smaller gate drive currents and therefore simpler and less expensive gate drivers. On the other hand, additional gate driver functionality of a feedback signal for confirmation of the transistor on/off state is desired.

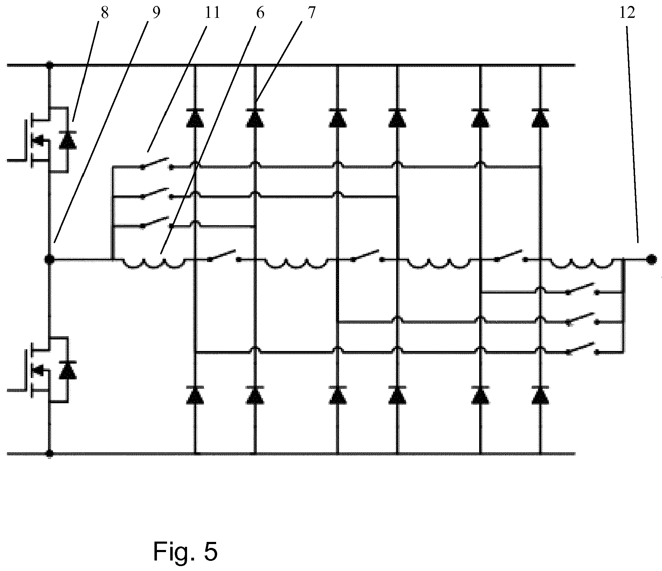

Figure 5 shows the electrical connection schematic of one of the phases of a four-stage electric gear. The electric gear of Figure 5 is similar to that of Fig. 4, except that each motor phase comprises four partial windings, which can be connected in several configurations by means of a total of six switches per phase. Possible wiring configurations include all parallel, all in series, and a parallel configuration of two pairs of series connected partial windings.

The integrated electric gear and charger system for battery powered electric vehicles according to embodiments of the present invention also includes a controller (not shown) for controlling the electric gear, the inverter, and the charger in accordance with a current mode of operation. Control tasks may also be distributed among several controllers for controlling operation of each of the electric gear, the inverter, and the charger. Modes of operation include a motor drive operation for driving the motor with power provided by the battery, a battery charging operation for charging the battery with power provided by an external source, a recuperation mode for charging the battery with electric power generated by the motor, and other modes.

During motor drive operation, the controller applies appropriate control signals to the switches (8) of the inverter in order to generate appropriate AC voltages for driving each phase of the motor. Any conventional technique, including pulse-width modulation, can be employed for generating driving currents with the appropriate amplitude, frequency, and phase for each motor phase. The inverter shall be able to communicate with the position sensor (23) if accurate rotor position is required for controlling the motor. During motor drive operation, a switching state of the electric gear remains generally unaltered. However, a process for electric gear shift will be described below.

During a battery charging operation, any uncontrolled current through motor windings has to be prevented. This can be ensured by keeping all switches (11) of the electric gear in the OFF state. At the same time, inverter switches (8) can be employed either for (pulse-width) modulating the amplitude of the charging current and/or for rectifying the output voltage of the charger (2). A battery management system (22) performs control of the charging process.

During recuperation, electric power generated by the motor can be buffered and/or used for recharging the battery. The controller generates appropriate control signals for the inverter switches (8) in order to rectify and route the generated current accordingly.

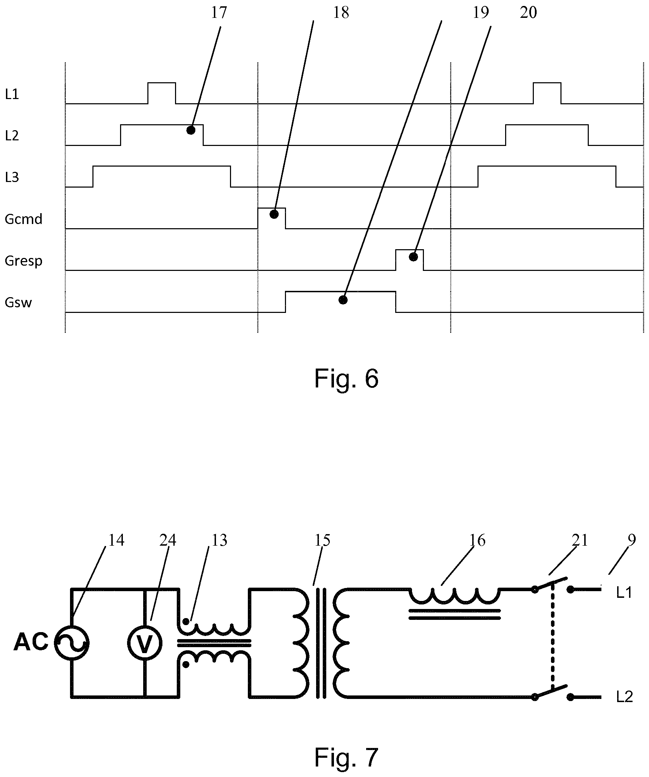

Figure 6 shows a sequence of the electric gear switching procedure during motor operation. The commands for switching between the gear configurations are received over digital lines, typically from the power inverter control (4). This kind of control makes for the fastest and most efficient transitions, however other control configurations with different central control units (e.g. PCU, ECU, BMS, etc.) utilizing different communication protocols, are also possible.

In the following, a process for switching the electric gear during motor operation is described. First the inverter/controller disables the pulse-width modulation (PWM) (17) after a fully concluded PWM cycle. The PWM is disabled for one PWM period, during which all the inverter transistors (8) are turned OFF (i.e. not conducting). After disabling the PWM, the inverter control sends the command "Gcmd" (18) for electric gear to shift (switch/transition between configurations). Any form or number of digital communication protocols can be used.

After the received command, the electric gear executes the gear shift procedure (19). The gear transistors that were currently ON are switched OFF. The free-wheeling diodes (7) enable the continuation of the current flowing through the motor wirings, which at this point are disconnected from the power inverter, directing the energy to the DC bus (capacitors and battery), thus preventing breakdown of the transistors. A few micro seconds (µs) after turning OFF the first set of transistors, the second set of transistors is turned ON, achieving the demanded electric gear state. A successful transition is followed by a response signal "Gresp" (20) from the electric gear to the inverter control, confirming the concluded gear shift procedure. Any form or number of digital communication protocols can be used. The inverter then reactivates the PWM accounting for the different set of motor parameters (inductance, resistance, torque coefficient and induced voltage coefficient) corresponding to the current gear configuration. If necessary, the inverter has to adapt the current regulation loop settings as well.

Since the transition as described above occurs within a single PWM period, the current drop in the windings is negligible. Because of the change in the motor torque coefficient after the shift, the inverter needs to change the current reference so as to maintain a constant torque. Of course, as determined by the needs the application, the functionality of maintaining a constant torque after shifting, can also be disabled.

Functionality of the electric gear is closely tied to the charger functionality. The electronics of the inverter with the appropriate software is capable of multiple functionalities like motor drive, recuperative braking, AC to DC rectification, DC to DC transformation, etc., assuming appropriate additional hardware is provided. Integration of a charger is much easier if the electric gear is also a part of the system. To utilize the power inverter (4) as the active part of the charger to charge from the electrical grid (14), the motor has to be disconnected from the power inverter (4), otherwise the active half-bridges would cause unwanted and uncontrolled current through the motor windings. The disconnection of the motor can in this case be done by the electric gear by disconnecting all of the electric gear switches.

Figure 7 shows a simplified circuit diagram of the integrated charger. The charger comprises a mains line filter (13), a voltage sensing device (24), a transformer (15), an inductor (16), and a charger switch (21) for selectively connecting the charger to the inverter.

Transformation of the grid voltage (14) to appropriate voltages via a transformer (15) is required, since the grid voltages are usually not suitable for charging at typical battery voltages. Further, the transformer (15) provides galvanic insulation of the driving system. Another switch (21) is needed to disconnect the transformer (15) from the inverter when the system is disconnected from the grid or when the inverter drives the motor. This switch can be either a solid-state or a mechanical switch and can be controlled by either the inverter control unit or by any other devices.

An operational algorithm example of integrated electric gear and charger incorporates the functionality described above and involves additional functionality of the power inverter for charging the battery. When the system is plugged in to the grid the power inverter control is activated, requesting the electric gear to disable all the switches/transistors. This is followed by connecting the charger to the power inverter via the charger switch (21). The inverter starts to drive the charging current that needs to be synchronized with the phase of the grid AC voltage. The inverter is therefore connected to AC voltage sensor (24). The grid phase timing can be monitored by monitoring the "0V pass" of the voltage, however other methods of phase synchronization are also applicable. The charging current needs to be controlled according to specification of the battery (5). The charger is therefore connected to the battery management system (BMS) unit (22) in order to obtain the information of the maximum battery voltage, battery temperature and state of charge. It is also possible to reverse the energy flow in order to return the energy from the battery to the grid.

The PWM frequency can be lower than that required for motor drive, since the grid frequency is lower than typical electrical frequencies of electric motors. The combination of the PWM frequency and the inductor (16) can be selected so as to optimize efficiency and keep the electromagnetic emissions at a minimum. The grid line filter (13) filters out the noise and interference caused primarily by the PWM carried to the primary side of the transformer through parasitic capacitive coupling of the transformer.

The present invention provides an integrated electric gear and charger electronic system for battery powered vehicles. The electric gear comprises a first plurality of switches that are used for connecting windings of the electric motor in either one of several different wiring configurations, thereby altering the motor characteristics. A second plurality of switches is connected in pairs in a half-bridge configuration for generating appropriate AC voltages for each phase of the motor and for connecting an output of the charger to the battery. The second plurality of switches can thus be shared as the power electronics of the inverter for driving the motor and as the power electronics of the charger for charging the battery with electric power provided by an external power source.

The present invention can achieve at least the following advantages. First of all, the motor is completely excluded (electrically separated) from the circuit in the charging mode, so that no torque will be generated. This is important in view of possible failure modes. Further, electric losses are reduced since no current is passing through the motor. Second, the system is galvanically insulated (with the transformer) which is very important from a safety perspective. Third, the second plurality of switches enables additional functionalities of modification of the motor torque constant, and consequentially motor induced voltage constant which results in the potential of using a less powerful power stage to achieve the same peak torque, the same top speed, and only losing the high torque and high-speed segment of the motor working points, which is a crucial element for cost optimization in direct drive system. Fourth, the second plurality of switches also enables a fast transition between both electric gears without losing torque, which is a major advantage compared to, for example, slow relay circuits. Finally, in a situation where individual solutions of either one of the charger and the electric gear do not make sense with regard to costs, the integrated solution can be more attractive.

## Claims

1. A driving system for an electric machine, said system comprising:
an electric gear (1) comprising a first plurality of switches (11) for switching a wiring configuration of the electric machine (3) by connecting windings (6) of the electric machine in either one of at least a series configuration and a parallel configuration, thereby allowing to change the characteristics of the electric machine (3);
an inverter (4) for converting a battery voltage into an AC voltage for driving the electric machine, the inverter comprising a second plurality of switches (8) in a half-bridge configuration for connecting each phase of the electric machine selectively to either one of two poles of the battery voltage;
a charger (2) for charging the battery (5) with electric power provided by an external power source; and
a controller for controlling the first plurality of switches (11) and the second plurality of switches (8),
wherein the second plurality of switches (8) is further configured for connecting an output of the charger (2) to the battery (5),
**characterized in that**
the controller is configured for controlling the second plurality of switches (8) in accordance with a pulse-width modulation scheme so as to generate, for each winding (6) of the electric machine (3), a driving current having a desired amplitude, frequency and phase during a motor driving operation,
wherein the controller is further configured for receiving a request for switching the wiring configuration of the electric machine from a first configuration to a second configuration while the electric machine is used in a motor operation, for interrupting PWM control of the second plurality of switches for a single PWM time period, changing switching states of the first plurality of switches (11) to the second configuration, and restarting PWM control of the second plurality of switches in accordance with the second configuration,
wherein the changing of the switching state of the first plurality of switches (11) is completed within the single PWM time period.

2. The driving system according to claim 1, wherein the first plurality of switches (11) is further configured for interrupting any current through the windings (6) of the electric machine (3).

3. The driving system according to claim 1, wherein the controller is further configured for controlling the first plurality of switches (11) and the second plurality of switches (8) during a battery charging operation such that the output of the charger (2) is connected with the battery (5) while any current through the windings (6) of the electric machine (3) is interrupted by means of the first plurality of switches (11).

4. The driving system according to claim 3, wherein the controller is further configured for controlling the second plurality of switches (8) in accordance with a pulse-width modulation scheme so as to generate a battery charging current having a desired amplitude during the battery charging operation.

5. The driving system according to any of the preceding claims, wherein the controller is further configured for controlling the second plurality of switches (8) such that, after restarting PWM control, a torque delivered by the electric machine is basically identical to a torque delivered by the electric machine immediately before the wiring configuration has been switched.

6. The driving system according to any of the preceding claims, wherein each of the first plurality of switches (11) and/or each of the second plurality of switches (8) is a semiconductor switch.

7. The driving system according to any of the preceding claims, wherein the first plurality of switches (11) comprises three switches for each machine phase, said switches being configured for connecting two partial windings (6) of each of the machine phase windings into either one of a parallel circuit configuration and a series circuit configuration.

8. The driving system according to any of the preceding claims, wherein a winding (6) for each phase of the machine (3) is divided into N partial windings, and wherein the first plurality of switches (11) comprises 3x(N-1) switches for each phase of the machine for connecting the respective partial windings in series or in parallel.

9. The driving system according to any of the preceding claims, wherein the charger (2) is configured for synchronizing charge current control to a phase of the external power supply by detecting zero-crossings of a voltage of the external power supply.

10. The driving system according to any of the preceding claims, wherein the charger (2) is configured for returning electric power from the battery (5) back to the external power supply.

11. The driving system according to any of the preceding claims, wherein the charger (2) further comprises a charger switch for disconnecting the charger from the inverter.

12. An electric vehicle with a driving system for an electric machine (3) according to any of the preceding claims.

## Patentansprüche

1. Antriebssystem für eine elektrische Maschine, wobei das System umfasst:
ein elektrisches Getriebe (1) mit einer erste Vielzahl von Schaltern (11) zum Umschalten einer Verdrahtungskonfiguration der elektrischen Maschine (3) durch Verbinden von Wicklungen (6) der elektrischen Maschine in wenigstens entweder einer Reihenkonfiguration oder einer Parallelkonfiguration, wobei dadurch die Eigenschaften der elektrischen Maschine (3) geändert werden können:
einen Wechselrichter (4) zum Umwandeln einer Batteriespannung in eine Wechselspannung zum Antreiben der elektrischen Maschine, wobei der Wechselrichter eine zweite Vielzahl von Schaltern (8) in einer Halbbrückenkonfiguration zum selektiven Verbinden von jeder Phase der elektrischen Maschine mit einem von zwei Polen der Batteriespannung umfasst;
ein Ladegerät (2) zum Laden der Batterie (5) mit von einer externen Stromquelle bereitgestelltem elektrischen Strom und
eine Steuerung zum Steuern der ersten Vielzahl von Schaltern (11) und der zweiten Vielzahl von Schaltern (8),
wobei die zweite Vielzahl von Schaltern (8) des Weiteren zum Verbinden eines Ausgangs des Ladegeräts (2) mit der Batterie (5) konfiguriert ist,
**dadurch gekennzeichnet, dass**
die Steuerung zum Steuern der zweiten Vielzahl von Schaltern (8) entsprechend einem Schema der Impulsbreitenmodulation (Pulse-Width Modulation - PWM) konfiguriert ist, um so für jede Wicklung (6) der elektrischen Maschine (3) einen Antriebsstrom mit einer gewünschten Amplitude, Frequenz und Phase während eines Motorantriebsvorgangs zu erzeugen,
wobei die Steuerung des Weiteren zum Empfangen einer Anforderung zum Umschalten der Verdrahtungskonfiguration der elektrischen Maschine von einer ersten Konfiguration in eine zweite Konfiguration konfiguriert ist, während die elektrische Maschine in einem Motorbetrieb verwendet wird, um die PWM Steuerung der zweiten Vielzahl von Schaltern für eine einzelne PWM Zeitperiode zu unterbrechen, die Schaltzustände der ersten Vielzahl von Schaltern (11) in die zweite Konfiguration zu ändern und die PWM Steuerung der zweiten Vielzahl von Schaltern entsprechend der zweiten Konfiguration erneut zu starten,
wobei das Ändern des Schaltzustands der ersten Vielzahl von Schaltern (11) innerhalb der einzelnen PWM Zeitperiode abgeschlossen wird.

2. Antriebssystem nach Anspruch 1, wobei die erste Vielzahl von Schaltern (11) des Weiteren zum Unterbrechen eines beliebigen Stroms durch die Wicklungen (6) der elektrischen Maschine (3) konfiguriert ist.

3. Antriebssystem nach Anspruch 1, wobei die Steuerung des Weiteren zum Steuern der ersten Vielzahl von Schaltern (11) und der zweiten Vielzahl von Schaltern (8) während eines Batterieladevorgangs konfiguriert ist, so dass der Ausgang des Ladegeräts (2) mit der Batterie (5) verbunden ist, während ein beliebiger Strom durch die Wicklungen (6) der elektrischen Maschine (3) mithilfe der ersten Vielzahl von Schaltern (11) unterbrochen wird.

4. Antriebssystem nach Anspruch 3, wobei die Steuerung des Weiteren zum Steuern der zweiten Vielzahl von Schaltern (8) entsprechend einem Schema der Impulsbreitenmodulation konfiguriert ist, um einen Batterieladestrom mit einer gewünschten Amplitude während des Batterieladevorgangs zu erzeugen.

5. Antriebssystem nach einem der vorhergehenden Ansprüche, wobei die Steuerung des Weiteren zum Steuern der zweiten Vielzahl von Schaltern (8) konfiguriert ist, so dass nach einem Neustart der PWM Steuerung ein von der elektrischen Maschine abgegebenes Drehmoment im Grunde mit einem Drehmoment identisch ist, das von der elektrischen Maschine unmittelbar vor dem Umschalten der Schaltungskonfiguration abgegeben wird.

6. Antriebssystem nach einem der vorhergehenden Ansprüche, wobei jeder aus der ersten Vielzahl von Schaltern (11) und/oder jeder aus der zweiten Vielzahl von Schaltern (8) ein Halbleiterschalter ist.

7. Antriebssystem nach einem der vorhergehenden Ansprüche, wobei die erste Vielzahl von Schaltern (11) drei Schalter für jede Maschinenphase umfasst, wobei die Schalter zum Verbinden von zwei Teilwicklungen (6) von jeder der Maschinenphasenwicklungen in entweder einer Parallelschaltungskonfiguration oder einer Reihenschaltungskonfiguration konfiguriert sind.

8. Antriebssystem nach einem der vorhergehenden Ansprüche, wobei eine Wicklung (6) für jede Phase der Maschine (3) in N Teilwicklungen unterteilt ist und wobei die erste Vielzahl von Schaltern (11) 3 x (N - 1) Schalter für jede Phase der Maschine zum Verbinden der jeweiligen Teilwicklungen in Reihe oder parallel umfasst.

9. Antriebssystem nach einem der vorhergehenden Ansprüche, wobei das Ladegerät (2) zum Synchronisieren der Ladestromsteuerung auf einer Phase der externen Stromversorgung durch Erfassen von Nulldurchgängen einer Spannung der externen Stromversorgung konfiguriert ist.

10. Antriebssystem nach einem der vorhergehenden Ansprüche, wobei das Ladegerät (2) zum Zurückführen von elektrischer Energie von der Batterie (5) zurück zur externen Stromversorgung konfiguriert ist.

11. Antriebssystem nach einem der vorhergehenden Ansprüche, wobei das Ladegerät (2) des Weiteren einen Ladeschalter zum Trennen des Ladegeräts vom Wechselrichter umfasst.

12. Elektrofahrzeug mit einem Antriebssystem für eine elektrische Maschine (3) nach einem der vorhergehenden Ansprüche.

## Revendications

1. Système d'entraînement pour une machine électrique, ledit système comprenant :
un engrenage électrique (1) comprenant une première pluralité de commutateurs (11) pour commuter une configuration de câblage de la machine électrique (3) en connectant des enroulements (6) de la machine électrique dans l'une parmi au moins une configuration en série et une configuration en parallèle, permettant ainsi de changer les caractéristiques de la machine électrique (3) ;
un onduleur (4) pour convertir une tension de batterie en une tension en courant alternatif (AC) pour entraîner la machine électrique, l'onduleur comprenant une seconde pluralité de commutateurs (8) dans une configuration en demi-pont pour connecter chaque phase de la machine électrique de manière sélective à l'un parmi deux pôles de la tension de batterie ;
un chargeur (2) pour charger la batterie (5) avec de l'énergie électrique fournie par une source d'énergie externe ; et
un dispositif de commande pour commander la première pluralité de commutateurs (11) et la seconde pluralité de commutateurs (8),
dans lequel la seconde pluralité de commutateurs (8) est en outre configurée pour connecter une sortie du chargeur (2) à la batterie (5),
**caractérisé en ce que**
le dispositif de commande est configuré pour commander la seconde pluralité de commutateurs (8) conformément à un schéma de modulation de largeur d'impulsion de manière à générer, pour chaque enroulement (6) de la machine électrique (3), un courant d'entraînement ayant des amplitude, fréquence et phase souhaitées lors d'une opération d'entraînement de moteur,
dans lequel le dispositif de commande est en outre configuré pour recevoir une demande de commutation de la configuration de câblage de la machine électrique d'une première configuration en une seconde configuration pendant que la machine électrique est utilisée lors d'une opération de moteur, pour interrompre une commande PWM de la seconde pluralité de commutateurs pendant une période de temps PWM unique, changer des états de commutation de la première pluralité de commutateurs (11) en la seconde configuration, et redémarrer une commande PWM de la seconde pluralité de commutateurs conformément à la seconde configuration,
dans lequel le changement de l'état de commutation de la première pluralité de commutateurs (11) est achevé dans la période de temps PWM unique.

2. Système d'entraînement selon la revendication 1, dans lequel la première pluralité de commutateurs (11) est en outre configurée pour interrompre tout courant à travers les enroulements (6) de la machine électrique (3).

3. Système d'entraînement selon la revendication 1, dans lequel le dispositif de commande est en outre configuré pour commander la première pluralité de commutateurs (11) et la seconde pluralité de commutateurs (8) lors d'une opération de charge de batterie de sorte que la sortie du chargeur (2) est connectée à la batterie (5) tandis que tout courant à travers les enroulements (6) de la machine électrique (3) est interrompu au moyen de la première pluralité de commutateurs (11).

4. Système d'entraînement selon la revendication 3, dans lequel le dispositif de commande est en outre configuré pour commander la seconde pluralité de commutateurs (8) conformément à un schéma de modulation de largeur d'impulsion de manière à générer un courant de charge de batterie ayant une amplitude souhaitée pendant l'opération de charge de batterie.

5. Système d'entraînement selon l'une quelconque des revendications précédentes, dans lequel le dispositif de commande est en outre configuré pour commander la seconde pluralité de commutateurs (8) de telle sorte, qu'après redémarrage d'une commande PWM, un couple délivré par la machine électrique est fondamentalement identique à un couple délivré par la machine électrique immédiatement avant la commutation de la configuration de câblage.

6. Système d'entraînement selon l'une quelconque des revendications précédentes, dans lequel chacun de la première pluralité de commutateurs (11) et/ou chacun de la seconde pluralité de commutateurs (8) est un commutateur à semi-conducteur.

7. Système d'entraînement selon l'une quelconque des revendications précédentes, dans lequel la première pluralité de commutateurs (11) comprend trois commutateurs pour chaque phase machine, lesdits commutateurs étant configurés pour connecter deux enroulements partiels (6) de chacun des enroulements de phase machine selon l'une parmi une configuration de circuit en parallèle et une configuration de circuit en série.

8. Système d'entraînement selon l'une quelconque des revendications précédentes, dans lequel un enroulement (6) pour chaque phase de la machine (3) est divisé en N enroulements partiels, et dans lequel la première pluralité de commutateurs (11) comprend 3x(N-1) commutateurs pour chaque phase de la machine pour connecter les enroulements partiels respectifs en série ou en parallèle.

9. Système d'entraînement selon l'une quelconque des revendications précédentes, dans lequel le chargeur (2) est configuré pour synchroniser une commande de courant de charge avec une phase de l'alimentation en énergie externe en détectant des passages par zéro d'une tension de l'alimentation en énergie externe.

10. Système d'entraînement selon l'une quelconque des revendications précédentes, dans lequel le chargeur (2) est configuré pour renvoyer de l'énergie électrique depuis la batterie (5) en retour vers l'alimentation en énergie externe.

11. Système d'entraînement selon l'une quelconque des revendications précédentes, dans lequel le chargeur (2) comprend en outre un commutateur de chargeur pour déconnecter le chargeur depuis l'onduleur.

12. Véhicule électrique ayant un système d'entraînement pour une machine électrique (3) selon l'une quelconque des revendications précédentes.
